# EUROPÄISCHE PATENTSCHRIFT

(11) **EP 1 457 402 B1**
(45) Veröffentlichungstag und Bekanntmachung des Hinweises auf die Patenterteilung: **23.04.2008**
(21) Anmeldenummer: 04002399.6
(22) Anmeldetag: 04.02.2004
(51) Int. Cl.: B61H 13/24, B61H 13/36, B60T 13/36

(54) **Klotzbremseinrichtung eines Drehgestells eines Schienenfahrzeugs**
Tread brake unit for a bogie of a railway vehicle
Unité de freinage à sabot pour un bogie d'un véhicule ferroviaire

(30) Priorität: 06.02.2003 DE 10304716
(43) Veröffentlichungstag der Anmeldung: 15.09.2004
(60) Teilanmeldung: 05016869.9
(73) Patentinhaber: KNORR-BREMSE Systeme für Schienenfahrzeuge GmbH, 80809 München (DE)
(72) Erfinder: Staltmeir, Josef, 80807 München (DE); Fuderer, Erich, 82256 Fürstenfeldbruck (DE); Wolfsteiner, Peter, 80797 München (DE); Ernstberger, Heinrich, 80469 München (DE); Elstorpff, Marc-Gregory, 80638 München (DE)
(74) Vertreter: Mattusch, Gundula

(56) Entgegenhaltungen:
- US-A- 5 667 040
- US-A- 5 785 159
- US-A- 5 817 375

## Beschreibung

### Stand der Technik

Die Erfindung betrifft eine Klotzbremseinrichtung eines Drehgestells eines Schienenfahrzeugs beinhaltend zwei Radsätze mit je zwei Rädern, sowie zwei jeweils einer Radachse zugeordnete und parallel zu dieser verlaufende Bremsbalken, welche Bremsklötze tragen und über Druckstangen miteinander in Verbindung stehen, die durch wenigstens einen druckmittelbetätigten Zylinder-Kolbentrieb zum Bremseingriff der Bremsklötze mit zugeordneten Bremsflächen der Räder betätigbar sind, gemäß der Gattung von Anspruch 1.

Eine solche Klotzbremseinrichtung ist beispielsweise aus der WO 00/02756 bekannt, wobei die Bremsbalken durch Plattenprofile gebildet werden. Das als U- oder Z-Profil ausgebildete Plattenprofil eines Bremsbalkens trägt zwei druckmittelbetätigte Zylinder-Kolbentriebe als separate, eigenständige Baueinheiten, welche je eine Druckstange betätigen. Die Mittelachsen der Zylinder-Kolbentriebe erstrecken sich längs der Querbalken. Folglich findet die Ausfahrbewegung der Kolben parallel zu den Radachsen statt und muss durch Umlenkungsgetriebe auf die quer zu den Radachsen angeordneten Druckstangen umgelenkt werden, welche im Bremsfall die Querbalken voneinander weg und die Bremsklötze gegen die Räder pressen.

Aus der US 5,785,159 A1 ist eine Klotzbremseinrichtung bekannt, bei der der Bremszylinder starr auf dem Bremsbalken montiert wird.

Der vorliegenden Erfindung liegt demgegenüber die Aufgabe zugrunde, eine Klotzbremseinrichtung der eingangs erwähnten Art derart weiterzubilden, dass sie kostengünstiger zu fertigen ist und ein geringeres Gewicht aufweist.

Erfindungsgemäß wird diese Aufgabe durch die kennzeichnenden Merkmale von Anspruch 1 gelöst.

### Vorteile der Erfindung

Weil zumindest ein Teil eines Bremsbalkens selbst den Zylinder des Zylinder-Kolbentriebs bildet, geht die Erfindung weiter als der eingangs genannte Stand der Technik, bei welchem der Zylinder des Zylinder-Kolbentriebs als separates Bauteil vom dem ebenfalls als separates Bauteil ausgeführten Bremsbalken getragen wird. Vielmehr bildet gemäß der Erfindung der eigentlich zum Halten der Bremsklötze und zum Übertragen der Anpreßkraft gedachte Bremsbalken zugleich den Zylinder des Zylinder-Kolbentriebs oder umgekehrt, so dass gegenüber dem Stand der Technik weniger Bauteile zu Fertigen und zu Montieren sind. Folglich wird durch die Erfindung eine selbsttragende Bauweise des wenigstens einen Zylinder-Kolbentriebs verwirklicht.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform wird eine Zylinderlauffläche des Zylinders des Zylinder-Kolbentriebs unmittelbar durch eine innere Umfangsfläche der Wandung des Bremsbalkens oder durch eine von der Wandung getragene Zylinderlaufbuchse gebildet. Eine solche Zylinderlaufbuchse bildet im Unterschied zum eingangs genannten Stand der Technik jedoch nicht einen vollständigen Zylinder, sondern nur ein Umfangsteil und muss an ihrer radial äußeren Umfangsfläche von einer steifen Wandung getragen werden, weil sie kein selbsttragendes Bauteil darstellt.

Weiterhin ist der Kolbenhub vorzugsweise groß gegenüber dem Durchmesser des Zylinder-Kolbentriebs. Dies ist insofern vorteilhaft, weil längs der Radachsen relativ viel Platz vorhanden ist, jedoch nach oben und unten insbesondere bei Drehgestellen mit kleinen Raddurchmessern, wie sie z.B. bei Autotransportfahrzeugen oder Containertragwagen üblich sind, der Bauraum beengt ist.

Gemäß einer Weiterbildung dieser Ausführungsform sind in dem Bremsbalken zwei koaxiale und gegenläufig arbeitende Zylinder-Kolbentriebe integriert. Dann weist der Bremsbalken vorzugsweise zwei in Bezug zu einer Mittelebene des Drehgestells symmetrisch umschlagbar und identisch ausgebildete Gehäusehälften auf, welche zumindest abschnittsweise die Zylinder der Zylinder -Kolbentriebe bilden. Die beiden Gehäusehälften sind beispielsweise als identische hohle Gußformlinge ausgebildet und über Flanschverbindungen miteinander verbunden. Aufgrund der Ausbildung als Gleichteile sind die Gehäusehälften günstig zu fertigen und einfach zu bevorraten. Außerdem weisen solche hohlen Gehäuseteile mit nahezu vollständig geschlossener Wandung ein hohes Widerstandsmoment gegenüber Biegung und Torsion auf, was gerade angesichts der durch den Bremsbalken zu übertragenden hohen Bremskräfte von Vorteil ist.

In besonders bevorzugter Weise ist in den Gehäusehälften je ein den Zylinder-Kolbentrieben nachgeordnetes Umlenkungsgetriebe zur Umlenkung der Kolbenbewegung auf die Druckstangen gekapselt aufgenommen. Hierdurch sind das Umlenkungsgetriebe und insbesondere dessen Bewegungslagerstellen vor Verschmutzung, Spritzwasser und mechanischer Einwirkung geschützt, was sich verschleißmindernd auswirkt. Den Gehäusehälften sind weiterhin endseitig die Aufnahmen für die Bremsklötze angeformt.

Gemäß einer bevorzugten Ausführungsform ist den beiden Gehäusehälften ein Zwischengehäuse zwischengeordnet, in welchem ein zentraler, beide Zylinder der Zylinder -Kolbentriebe mit Druckmittel versorgender Druckmittelanschluß ausgebildet ist. Infolgedessen müssen nicht zwei separate Druckmittelanschlüsse vorgesehen werden.

Im Falle einer Kombination der Betriebsbremse mit einer Feststellbremse ist in dem Zwischengehäuse vorzugsweise auch zumindest ein Teil einer Antriebsmechanik der Feststellbremse untergebracht. Die Antriebsmechanik der Feststellbremse umfasst beispielsweise einen durch Bremsbetätigungsorgane rotatorisch antreibbaren und mit den Zylinder-Kolbentrieben koaxialen Mutter-Spindeltrieb, wobei die Spindel an der Druckseite des einen Kolbens und die Mutter an der Druckseite des anderen Kolbens anschlagbar ausgebildet ist. Hierbei wird die Drehbewegung beispielsweise in die Mutter eingeleitet, wobei die Spindel an dem einen Kolben linear verschieblich und verdrehgesichert und die Mutter an dem anderen Kolben linear verschieblich, aber frei drehbar gelagert ist. Beispielsweise erfolgt die Lagerung der Spindel und der Mutter innerhalb je einer zentrischen becherförmigen Ausformung im zugeordneten Kolben. Zur Übertragung der Feststellbremskräfte auf die Kolben sind die Spindel und die Mutter endseitig mit je einem komplementär zu einem Boden der Ausformung des entsprechenden Kolbens geformten Anschlagkörper versehen. Darüber hinaus ist die Mutter des Mutter-Spindeltriebs vorzugsweise innerhalb einer im Zwischengehäuse koaxialen, axialfest und drehbar gelagerten Hülse axial verschieblich und mitdrehbar gelagert, welche zum Zuspannen und Lösen der Feststellbremse rotatorisch antreibbar ist. Hieraus ergibt sich eine schwimmende Lagerung des Mutter-Spindeltriebs im Zwischengehäuse, so dass sich dieser axial verlagern kann, um beim Feststellbremsen unterschiedliches Bremsklotzspiel am rechten und linken Rad auszugleichen.

Besonders bevorzugt sind die Bremsbalken zusammen mit den Druckstangen, Bremsklötzen und Zylinder-Kolbentrieben durch Hängelaschen am Drehgestell hängend befestigt, wobei die Hängelaschen einendseitig am Drehgestell durch sphärische Lager mit elastisch-dämpfenden Elementen allseitig schwenkbar gelagert und anderendseitig an die Bremsklötze tragenden Bremsschuhen angelenkt sind. Die Hängelaschen übertragen dann die an den Bremsklötzen im Bremsfall wirkende Umfangskraft auf das Drehgestell. Über die Hängelaschen kann die Klotzbremseinrichtung als komplett vormontiertes Bremsmodul am Drehgestell befestigt werden. Die elastisch-dämpfenden Elemente entkoppeln die Hängelaschen vom Drehgestell und verhindern die Übertragung von Körperschall auf letzteres, was die beim Bremsen entstehenden Geräusche reduziert. Die sphärische Lagerung der Hängelaschen am Drehgestell ermöglicht zum einen ein Verschwenken der Hängelaschen um gedachte, parallel zu den Radachsen verlaufende Schwenkachsen, wenn die Bremskrafterzeuger betätigt werden und sich folglich die radseitigen Enden der Hängelaschen in horizontaler Richtung voneinander weg oder aufeinander zu bewegen. Zum andern können die Bremsklötze durch Schwenken der Hängelaschen um gedachte, senkrecht zu den Radachsen verlaufende Schwenkachsen den Achsquerbewegungen der Räder folgen und folglich stets den Bremsflächen der Räder gegenüberliegen.

In besonders zu bevorzugender Weise sind in die Druckstangen Verschleißnachstelleinrichtungen integriert. Diese dienen zum Nachstellen des Bremsklotzverschleißes, wobei hierzu die Druckstangen auf eine größere Länge eingestellt werden. Dabei können die Druckstangen im wesentlichen senkrecht zu den Radachsen angeordnet oder zueinander winklig angeordnet sein und ausgehend von dem die Zylinder-Kolbentriebe aufnehmenden Bremsbalken divergieren. Letztere Anordnung ist insbesondere dann von Vorteil, wenn zwischen den Druckstangen Raum benötigt wird, beispielsweise dann, wenn ein Querträger des Drehgestells nach unten gezogen ist und die Druckstangen divergierend seitlich an ihm vorbei geführt werden müssen. Weil hierdurch die Anlenkpunkte an dem anderen Bremsbalken nach außen wandern, wird zugleich die auf diesen Bremsbalken wirkende Biegemomentenbelastung reduziert.

### Zeichnungen

Ausführungsbeispiele der Erfindung sind in der Zeichnung dargestellt und in der nachfolgenden Beschreibung näher erläutert. In der Zeichnung zeigt
- Fig.1: eine perspektivische Darstellung einer Klotzbremseinrichtung gemäß einer ersten Ausführungsform der Erfindung mit einem Bremsbalken in Form eines Gehäuses, das gleichzeitig die Zylinder von Zylinder-Kolbentrieben bildet;
- Fig.2: eine Schnittdarstellung durch einen Teil des Gehäuses mit einem Zylinder-Kolbentrieb der Klotzbremseinrichtung;
- Fig.3: Gehäusehälften des Gehäuses von Fig.1;
- Fig.4: eine vergrößerte Schnittdarstellung der Zylinder-Kolbentriebe;
- Fig.5: eine Schnittdarstellung entlang der Linie V-V von Fig.4;
- Fig.6a: eine Schnittdarstellung entlang der Linie VIa von Fig.4;
- Fig.6b: eine Schnittdarstellung entlang der Linie VIb von Fig.4;
- Fig.7: die Zylinder-Kolbentriebe von Fig.4 bei gelöster Feststellbremse und bei zugespannter Betriebsbremse;
- Fig.8: die Zylinder-Kolbentriebe von Fig.4 bei zugespannter Feststellbremse;
- Fig.9: eine Schnittdarstellung einer einzelnen Hängelasche;
- Fig. 10: eine vergrößerte Schnittdarstellung einer Klotzbremseinrichtung gemäß einer weiteren Ausführungsform;
- Fig. 11: eine Ansicht von unten auf ein Drehgestell mit einer Klotzbremseinrichtung gemäß einer weiteren Ausführungsform;
- Fig. 12: eine Vorderansicht des Drehgestells von Fig. 11;
- Fig.13: einen Teilschnitt einer weiteren Ausführungsform einer Klotzbremseinrichtung.

### Beschreibung der Ausführungsbeispiele

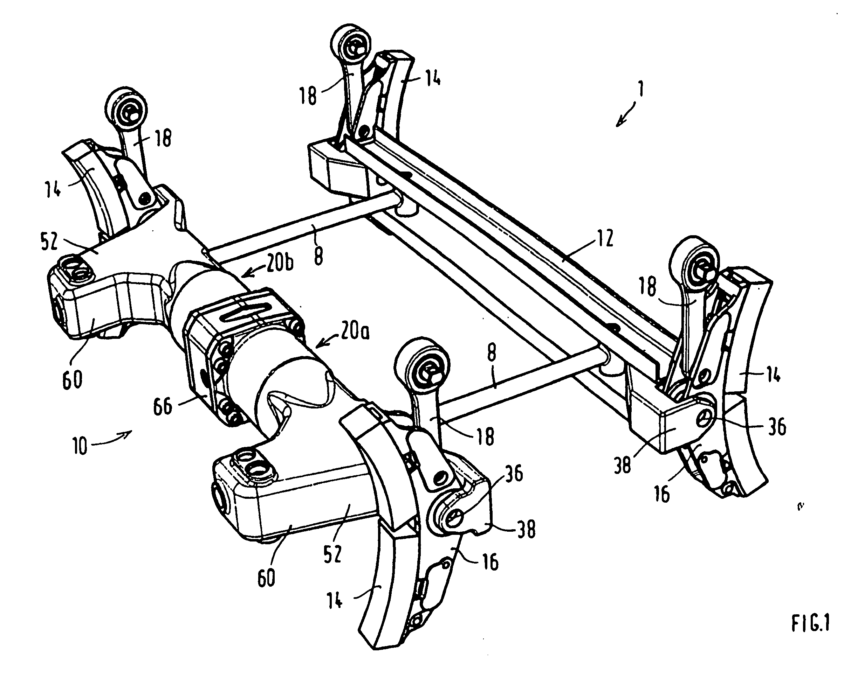

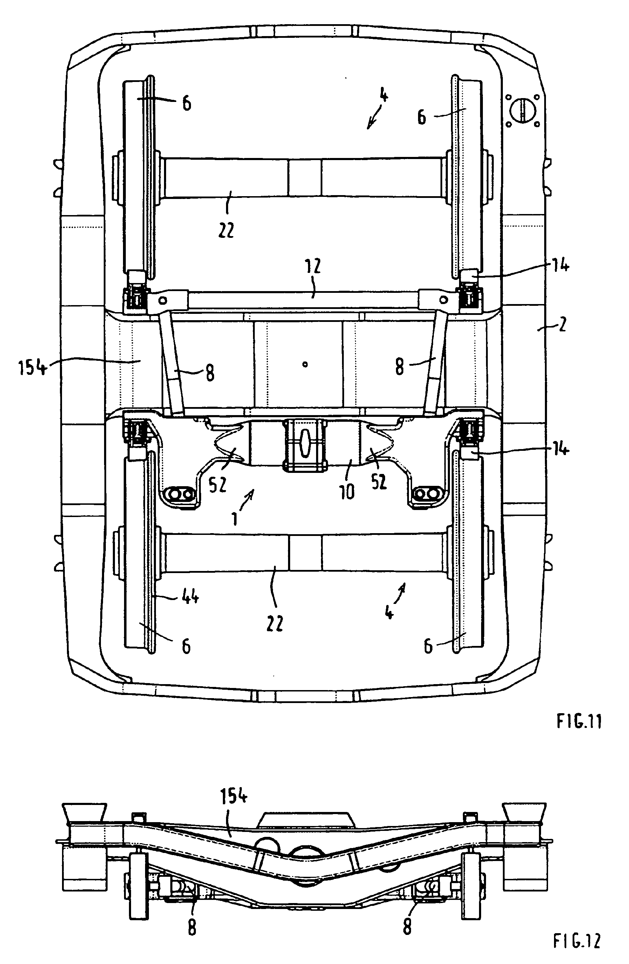

In Fig. 1 ist eine Klotzbremseinrichtung 1 eines Güterwagens gemäß einer bevorzugten Ausführungsform der Erfindung gezeigt. Die Klotzbremseinrichtung 1 ist im Ganzen an einem in Fig.11 gezeigten Drehgestell 2 des Güterwagens hängend befestigt, welches zwei Radsätze 4 mit je zwei Rädern 6 aufweist. Die Klotzbremseinrichtung 1 umfasst vorzugsweise zwei durch Druckstangen 8 miteinander in Verbindung stehende Bremsbalken 10, 12, vier an den Bremsbalken 10, 12 endseitig gehaltene und Bremsklötze 14 tragende Bremsschuhe 16, vier einerseits an den Bremsbalken 10, 12 und andererseits am Drehgestell 2 angelenkte Hängelaschen 18 sowie beispielsweise zwei in dem einem als hohles Gehäuse ausgebildeten Bremsbalken 10 aufgenommene, in Fig.1 nicht sichtbare Bremsaktuatoren 20a, 20b. Die Bremsklötze 14 eines Bremsbalkens 10, 12 sind den Rädern 6 einer Radachse 22 zugeordnet, wobei die Bremsbalken 10, 12 in etwa parallel zu den Radachsen 22 verlaufen. Die beiden Radsätze 4 sind gegenüber dem Drehgestell 2 in bekannter Weise federnd gelagert. Die Federung erlaubt es, dass die beiden Radsätze 4 unter anderem Längs- und Querbewegungen relativ zum Drehgestell 2 ausführen können.

Durch Druckmittelbeaufschlagung von Zylinder-Kolbentrieben 20a, 20b der Bremsaktuatoren werden die Druckstangen 8 derart betätigt, dass die Bremsbalken 10, 12 voneinander weg bewegt und hierdurch die von ihnen getragenen Bremsklötze 14 gegen die Räder 6 in Bremszuspannstellung gebracht werden. Gemäß der ersten Ausführungsform von Fig.1 sind die Druckstangen 8 im wesentlichen senkrecht zu den Bremsbalken 10, 12 angeordnet.

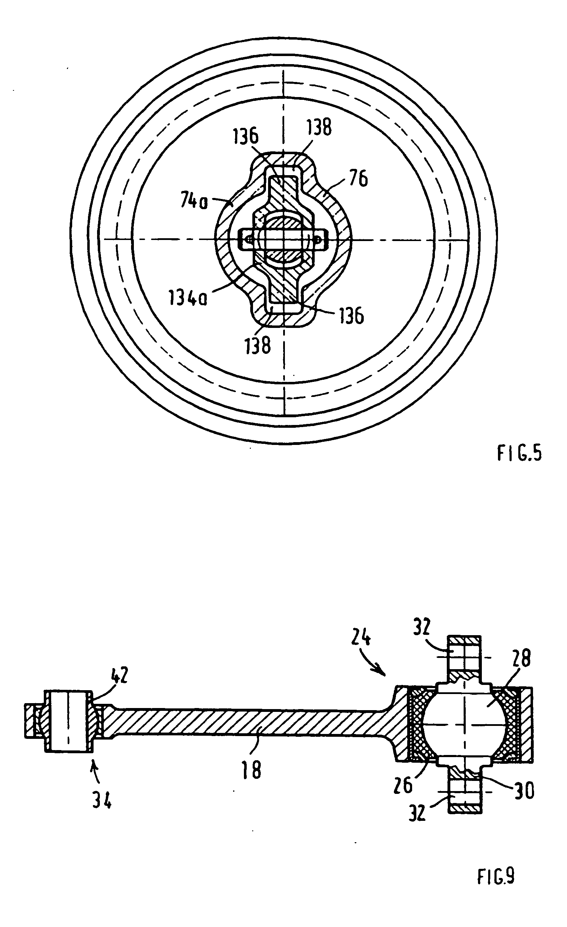

Die Hängelaschen 18 sind am Drehgestell 2 vorzugsweise allseitig schwenkbar gelagert. Hierbei wird als Schwenklager beispielsweise ein Sphäroblock 24 verwendet, d.h. ein innerhalb einer Gummihülle 26 mit komplementär sphärischer Lagerfläche gelagerter Kugelkopf 28 eines Kugelbolzens 30, wie aus der Schnittdarstellung durch eine einzelne Hängelasche 18 gemäß Fig.9 hervorgeht. Der Kugelbolzen 30 wird vorzugsweise als Flachbolzen mit zwei Durchgangsbohrungen 32 an den Enden ausgeführt, wobei der Flachbolzen 30 vorzugsweise an einem nicht dargestellten Längsbalken des Drehgestells 2 aufgenommen ist. Die allseitig schwenkbare Lagerung der Hängelaschen 18 erlaubt zum einen, dass die Bremsbalken 10, 12 zusammen mit den Bremsklötzen 14 den Querbewegungen der Radsätze 4 in Richtung der Radachsen 22 folgen können, um zu gewährleisten, dass sie stets den Bremsflächen der Räder 6 gegenüberliegen. Zum andern ermöglicht der Sphäroblock 24 ein Verschwenken der Hängelaschen 18 in Längs- bzw. Fahrtrichtung. Eine solche Schwenkbewegung findet beispielsweise statt, wenn die Bremsaktuatoren 20a, 20b betätigt werden und sich folglich die radseitigen Enden 34 der Hängelaschen 18 quer zu den Radachsen 22 voneinander weg oder aufeinander zu bewegen. Darüber hinaus muss eine solche Drehmöglichkeit für die Hängelaschen 18 gegeben sein, um den an den Bremsklötzen 14 auftretenden Verschleiß ausgleichen zu können. Folglich müssen die Hängelaschen 18 in wenigstens zwei Drehfreiheitsgraden in Bezug zum Drehgestell 2 verschwenkbar sein, was durch jede Art von sphärischem Lager oder durch ein ausreichend großes Spiel der Lagerung der Hängelaschen 18 am Drehgestell realisierbar ist. Die den Kugelkopf 28 umschließende Gummihülle 26 bewirkt durch ein Rückstellmoment infolge ihrer Elastizität, dass sich die Klotzbremseinrichtung 1 beim Übergang von der Zuspannstellung in die Lösestellung in die Ausgangslage zurückstellt, in welcher die Bremsklötze 14 nahezu äquidistant von den zugeordneten Bremsflächen der Räder 6 entfernt sind.

Wie am besten anhand von Fig.1 zu sehen ist, sind die Bremsklötze 14 tragenden Bremsschuhe 16 an den Bremsbalken 10, 12 um parallel zu den Radachsen 22 verlaufende Schwenkachsen schwenkbar angelenkt. Hierdurch sind die Bremsschuhe 16 kippbar und können sich beim Bremsen lageoptimal an die Bremsflächen der Räder 6 anlegen. Die Schwenklagerung wird beispielsweise durch Bremsschuhbolzen 36 realisiert, welche durch Durchgangsbohrungen in gabelförmig ausgebildeten, je endseitig an den Bremsbalken 10, 12 angeordneten, die Bremsschuhe 16 umgreifenden Aufnahmen 38 sowie durch eine zentrale Durchgangsbohrung des jeweiligen Bremsschuhs 16 gesteckt sind.

Bevorzugt sind die Hängelaschen 18 mit ihrem radseitigen Ende 34 direkt an den Bremsschuhen 16 mittels eines weiteren sphärischen Lagers 40 angelenkt, das beispielsweise eine in der Hängelasche 18 gelagerte sphärische Hülse 42 umfasst, die durch einen Hängelaschenbolzen am zugeordneten Bremsschuh 16 befestigt ist, wie aus Fig.9 hervorgeht. Diese Kinematik erlaubt eine Schrägstellung der Hängelaschen 18 bei Querbewegungen der Radachsen 22, während die an den radial vorstehenden Spurkränzen 44 der Räder 6 seitlich anstehenden und durch den Bremsschuhbolzen weiterhin senkrecht gehaltenen Bremsschuhe 16 in der Radebene im wesentlichen parallel zur Radbremsfläche ausgerichtet bleiben.

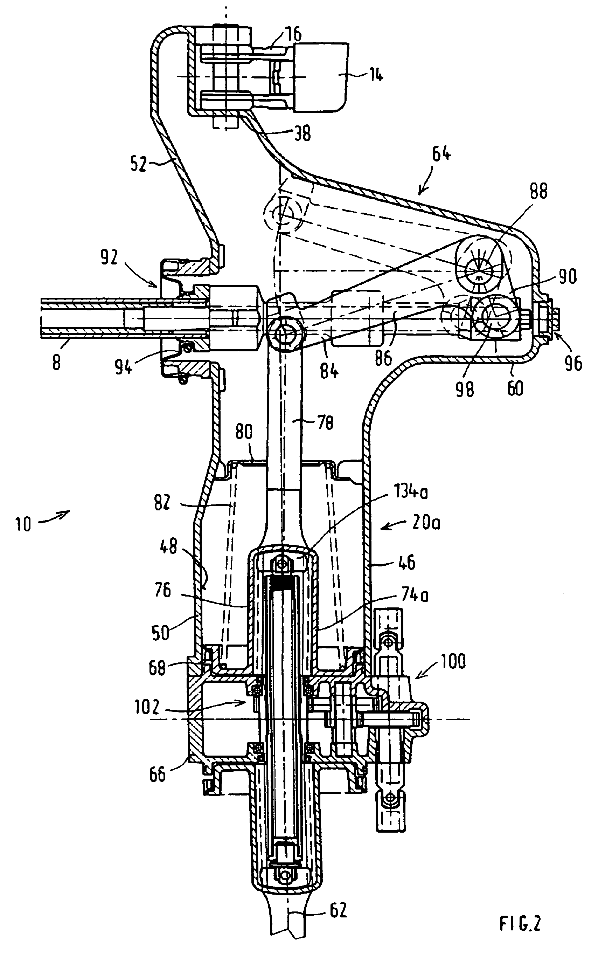

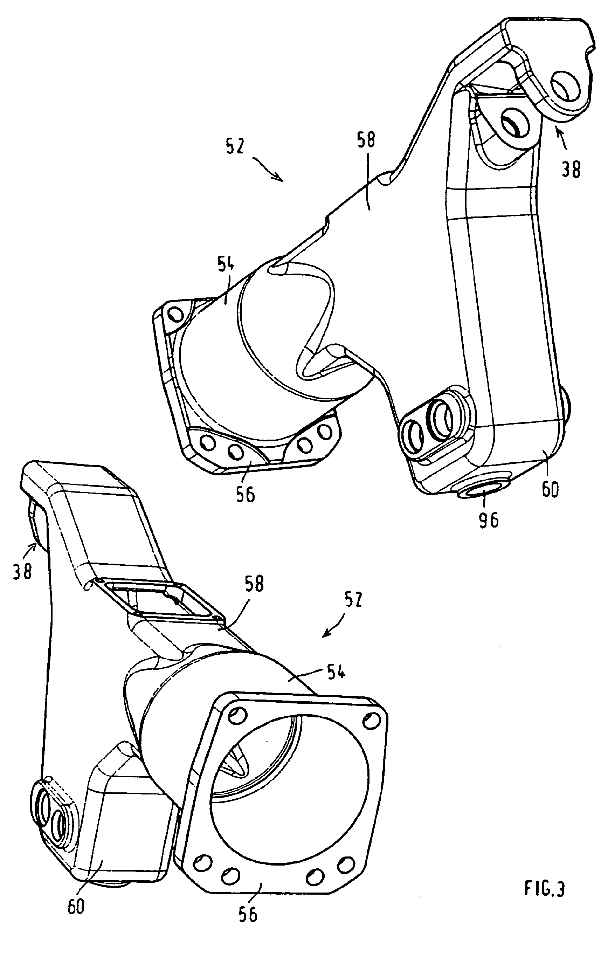

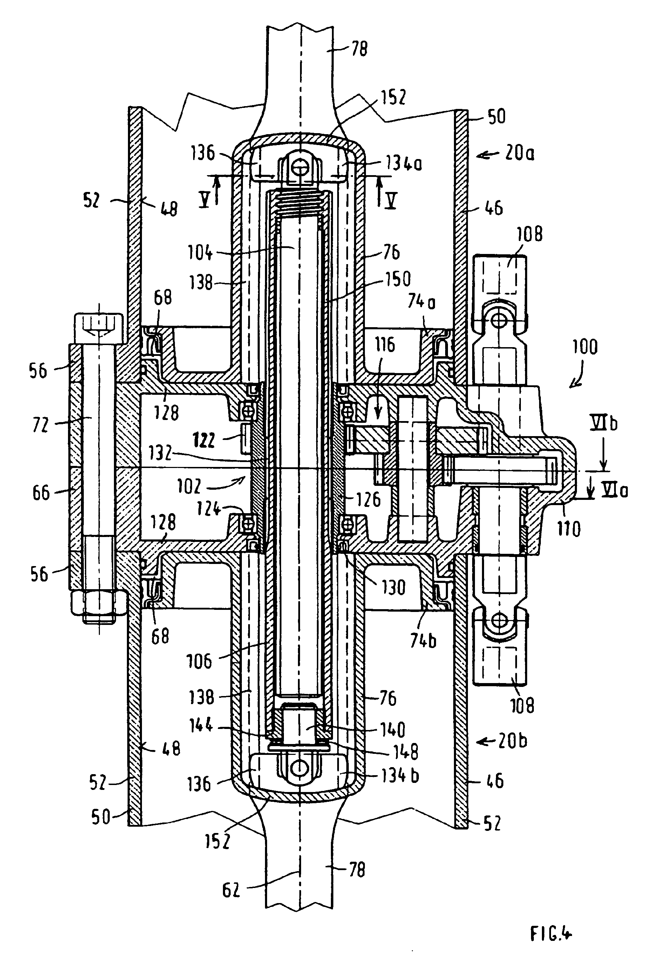

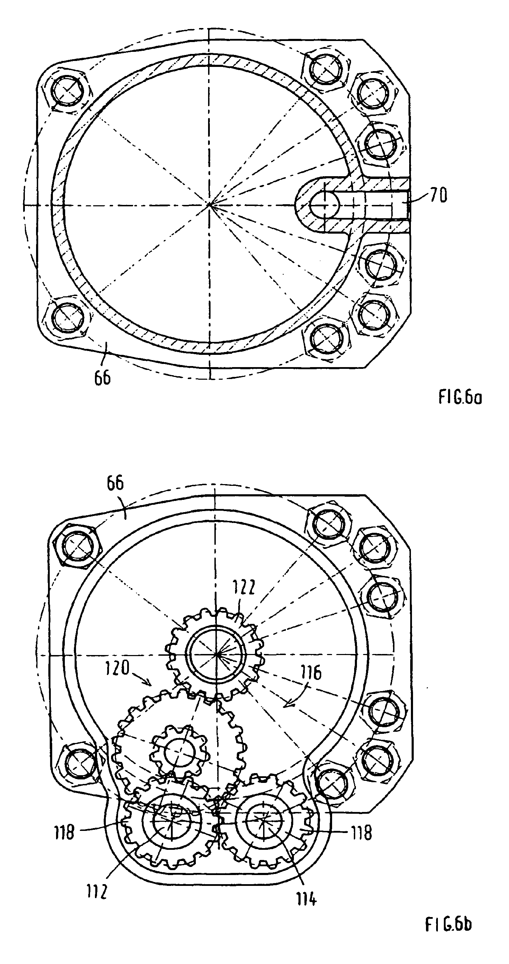

In dem als hohles Gehäuse ausgebildeten einen Bremsbalken 10 sind zwei koaxiale und gegenläufig arbeitende Zylinder-Kolbentriebe 20a, 20b integriert. Dabei bilden zumindest Abschnitte des Bremsbalkens 10 selbst die Zylinder 46 der Zylinder-Kolbentriebe 20a, 20b, wie insbesondere aus Fig. 2 hervorgeht. Genauer werden die Zylinderlaufflächen 48 der Zylinder 46 der Zylinder-Kolbentriebe 20a, 20b vorzugsweise unmittelbar durch eine innere Umfangsfläche der Wandung 50 des hohlen Bremsbalkens 10 gebildet. Alternativ können die Zylinderlaufflächen 48 auch durch von der Wandung 50 des Bremsbalkens 10 getragene Zylinderlaufbuchsen gebildet werden. Wie am besten aus Fig. 11 hervorgeht, weist das den einen Bremsbalken 10 repräsentierende Gehäuse zwei in Bezug zu einer Mittelebene des Drehgestells 2 symmetrisch umschlagbar und identisch ausgebildete Gehäusehälften 52 als hohle Gussformlinge auf, von welchen jede Gehäusehälfte 52 abschnittsweise einen Zylinder 46 eines Zylinder-Kolbentriebs 20a, 20b bildet. Diese Gehäusehälften 52 sind in Fig.3 einzeln dargestellt, wobei die im montierten Zustand einander gegenüberliegenden Abschnitte 54 der Gehäusehälften 52 je einen zylindrischen Querschnitt haben, um an der inneren Umfangsfläche die Zylinderlauffläche 48 auszubilden. Dem Ende des zylindrischen Abschnitts 54 ist zudem ein Flansch 56 angeformt. Dem zylindrischen Abschnitt 54 schließt sich nach außen hin ein Abschnitt 58 mit im wesentlichen rechteckförmigem Querschnitt und mit einer sich quer zu einer Mittelachse 62 der Zylinder-Kolbentriebe 20a, 20b erstreckenden sackartigen Ausformung 60 an, in welcher je ein Umlenkungsgetriebe 64 zur Umlenkung der längs der Mittelachsen 62 der Zylinder-Kolbentriebe 20a, 20b erfolgenden Kolbenbewegungen auf die senkrecht zu diesen angeordneten Druckstangen 8 aufgenommen ist. Den von den Flanschen 56 weg weisenden Enden der Gehäusehälften 52 sind die bereits erwähnten, gabelförmigen Aufnahmen 38 für die Bremsschuhe 16 angeformt. Wie am besten Fig.4 zeigt, ist zwischen den beiden Gehäusehälften 52 ein zweischaliges Zwischengehäuse 66 angeordnet, in welchem ein zentraler, in der Schnittebene von Fig.6a sichtbarer und je einen Druckraum 68 der Zylinder 46 mit Druckmittel versorgender Druckmittelanschluß 70 ausgebildet ist. Das Zwischengehäuse 66 ist zwischen den Gehäusehälften 52 beispielsweise mittels an den Flanschen 56 angreifenden Zugankern 72 gehalten, die durch Durchgangsbohrungen des Zwischengehäuses 66 hindurchgeführt sind. Der andere, ohne Bremsaktuator ausgeführte Bremsbalken 12 ist konventionell ausgebildet, beispielweise als Doppel-U-Profil und ist endseitig ebenfalls mit gabelförmigen Aufnahmen 38 für Bremsschuhe 16 versehen, wie Fig.1 zeigt.

In Fig.2 ist aus Maßstabsgründen lediglich eine Gehäusehälfte 52 dargestellt, jedoch sind beide Gehäusehälften samt den in ihnen aufgenommenen Baugruppen identisch aufgebaut. Die Kolben 74a, 74b der Zylinder-Kolbentriebe 20a, 20b weisen auf Ihrer Druckseite je eine zentrale becherförmige Ausformung 76 auf, von welcher kopfseitig eine zentrale, mit der Mittelachse 62 koaxiale Kolbenstange 78 nach außen wegragt. Die Kolben 74a, 74b sind durch sich an in den Gehäusehälften 52 gehaltenen Zwischenböden 80 abstützenden Rückstellfedern 82 in Lösestellung vorgespannt. Die Kolbenstange 78 ist an einem längeren Schenkel 84 eines zweischenkeligen Winkelhebels 86 angelenkt, der beispielsweise das Umlenkungsgetriebe 64 bildet. Der Winkelhebel 64 ist von der sackartigen Ausformung 60 der entsprechenden Gehäusehälfte 52 vollständig umschlossen und in Bezug zu dieser mittels einer Bolzenlagerung 88 schwenkbar gelagert. Die beiden Schenkel 84, 90 des Winkelhebels 86 sind in etwa rechtwinkelig zueinander, wobei der kürzere Schenkel 90 an ein Ende der zugeordneten Druckstange 8 angelenkt ist, die aus einer quer zur Mittelachse 62 der Zylinder-Kolbentriebe 20a, 20b angeordneten Öffnung 92 der Gehäusehälfte 52 ragt. Je nachdem, wo die Anlenkbohrung für die Bolzenlagerung 88 des Winkelhebels 86 angeordnet wird, kann ein jeweils anderes Übersetzungsverhältnis erzielt werden, beispielsweise 4/1 oder 3/1. So erhält man für unterschiedliche Schienenfahrzeuge ein breites Bremskraftspektrum, ohne dass hierfür andere Zylinder-Kolbentriebe 20a, 20b und insbesondere andere Zylinderdurchmesser verwendet werden müßten, so dass die erfindungsgemäße Klotzbremseinrichtung 1 als standardisierte Gleichbaueinheit verwendet werden kann. Zur Abdichtung des Gehäuseinneren ist zwischen der Druckstange 8 und der Gehäusehälfte 52 eine flexible Dichtung 94 vorgesehen. Darüber hinaus sind auch weitere Öffnungen des Bremsbalkens 10, beispielsweise Montageöffnungen 96 durch Deckel verschlossen, so dass der Bremsbalken 10 ein geschlossenes Gehäuse bildet. Folglich sind die Winkelhebel 86 samt Ihrer Bolzenlagerung 88, die Zylinder-Kolbentriebe 20a, 20b sowie die Anlenkungen 98 der Druckstangen 8 an die Winkelhebel 86 innerhalb des Bremsbalkens 10 geschützt vor Staub, Spritzwasser und mechanischer Einwirkung gelagert. In beide Druckstangen 8 ist jeweils eine Verschleißnachstelleinrichtung integriert, deren Aufbau und Funktionsweise bekannt ist und daher keiner weiteren Erläuterung bedarf.

Wie am besten aus Fig.4 hervorgeht, ist in dem einen Teil des Bremsbalkens 10 bildenden Zwischengehäuse 66 weiterhin zumindest ein Teil einer Antriebsmechanik 100 einer Feststellbremse aufgenommen, welche einen durch Feststellbremsbetätigungsorgane rotatorisch antreibbaren und mit den Zylinder-Kolbentrieben 20a, 20b koaxialen Mutter-Spindeltrieb 102 umfasst, wobei die Spindel 104 an der Druckseite des Kolbens 74a des einen Zylinder-Kolbentriebs 20a und die Mutter 106 an der Druckseite des Kolbens 74b des anderen Zylinder-Kolbentriebs 20b anschlagbar ausgebildet ist. Zum Zuspannen und Lösen der Feststellbremse wird beispielsweise über an der Seitenfläche des Schienenfahrzeugs angeordnete, aus Maßstabsgründen nicht dargestellte Handräder eine Drehbewegung in vorzugsweise zwei parallel zu den Radachsen 22 verlaufende Gelenkwellen 108 eingeleitet, welche von beiden Seiten her in einen vorspringenden Fortsatz 110 des Zwischengehäuses 66 münden und dort mit je einer Eingangswelle 112, 114 eines Zahnradgetriebes 116 in Drehverbindung stehen, welches am besten in der Schnittzeichnung gemäß Fig.6b zu sehen ist. Da die Feststellbremse in der Praxis von nur einer Seite des Schienenfahrzeugs her betätigt wird, tragen die beiden Eingangswellen 112, 114 miteinander kämmende Zahnräder 118, so dass eine Drehverbindung zwischen den beiden Gelenkwellen 108 besteht. Dabei wird die Feststellbremse durch eine Rechtsdrehung der Handräder zugespannt und durch Linksdrehung gelöst. Zur Weiterleitung der Drehbewegung auf den Mutter-Spindeltrieb 102 sind den Eingangswellen 112, 114 beispielsweise zwei Zahnradstufen 120 nachgeordnet, wobei der Abtrieb des Zahnradgetriebes 116 über ein zentrales Zahnrad 122 erfolgt, welches mit einer koaxialen, im Zwischengehäuse 66 vorzugsweise durch Wälzlager 124 gelagerten, zylindrischen Hülse 126 einstückig ausgebildet ist (Fig.4). Alternativ könnte das zentrale Zahnrad 122 auch auf die Hülse 126 aufgeschrumpft sein. Den Enden der Hülse 126 und den beiden Böden 128 des Zwischengehäuses ist je eine Bewegungsdichtung 130 zwischengeordnet, um die sich axial beidseits anschließenden Druckräume 68 der Zylinder-Kolbentriebe 20a, 20b gegenüber dem Inneren des Zwischengehäuses 66 abzudichten.

Wie Fig.4 am besten zeigt, umschließt die Hülse 126 die Mutter 106 des Mutter-Spindeltriebs 102 und ist mit dieser drehfest verbunden. Zusätzlich ist die Mutter 106 innerhalb der Hülse 126 axial verschieblich aufgenommen. Dies kann beispielsweise dadurch realisiert sein, dass eine Koppelung zwischen der Hülse 126 und die Mutter 106 durch ein Keilwellenprofil 132 oder eine Paßfeder erfolgt. Folglich ist der gesamte Mutter-Spindeltrieb 102 gegenüber der Hülse 126 in Richtung der Mittelachse 62 der Zylinder-Kolbentriebe 20a, 20b axial verschieblich oder schwimmend gelagert. Weiterhin sind die Spindel 104 und die Mutter 106 des Mutter-Spindeltriebs 102 innerhalb der becherförmigen Ausformungen 76 der zugeordneten Kolben 74a, 74b linear verschieblich geführt, wie aus der Schnittdarstellung von Fig.5 hervorgeht. Dies ist beispielsweise dadurch realisiert, dass die Spindel 104 und die Mutter 106 endseitig mit je einem Anschlagkörper 134a, 134b mit vorzugsweise symmetrischen Seitenflügeln 136 versehen sind, welche in komplementär geformte und in axialer Richtung verlaufende Nuten 138 eingreifen, welche an den Innenflächen der Ausformungen 76 der Kolben 74a, 74b ausgebildet sind. Der der Spindel 104 zugeordnete Anschlagkörper 134a ist mit dieser drehfest verbunden, während der der Mutter 106 zugeordnete Anschlagkörper 134b mit einem Wellenstumpf 140 verbunden ist, der gegenüber einem mit der Mutter 106 gekoppelten hülsenförmigen Endstück 144 beispielsweise mittels eines Axialnadellagers 148 drehbar ist. Die Spindel 104 des Mutter-Spindeltriebs 102 ist innerhalb der Mutter 106 durch ein Gewinde 150 verschraubbar, so dass eine über das Zahnradgetriebe 116 eingeleitete Drehung der Hülse 126 ein Verschrauben der Spindel 104 relativ zur Mutter 106 bewirkt, wodurch sich der Mutter-Spindeltrieb 102 längt oder verkürzt. Neben der Funktion als Führungselement für die Spindel 104 und die Mutter 106 bzw. als Verdrehsicherung für die Spindel 104 üben diese Anschlagkörper 134a, 134b eine weitere Funktion als Mitnehmer für die Kolben 74a, 74b im Falle einer Feststellbremsung aus. Hierzu sind die Anschlagkörper 134a, 134b kopfseitig komplementär zu den zugeordneten Böden 152 der Ausformungen 76 der Kolben 74a, 74b geformt, beispielsweise ballig. Folglich wirkt die beschriebene Antriebsmechanik 100 der Feststellbremse direkt auf die Kolben 74a, 74b der die Betriebsbremse betätigenden Zylinder-Kolbentriebe 20a, 20b.

In Fig.4 ist die Lösestellung von Betriebsbremse und Feststellbremse gezeigt, in welcher die beiden Kolben 74a, 74b in eingefahrener Stellung die Böden 128 des Zwischengehäuses 66 kontaktieren. Die Anschlagkörper 134a, 134b kontaktieren dabei die Böden 152 der Kolben 74a, 74b in den Ausformungen 76.

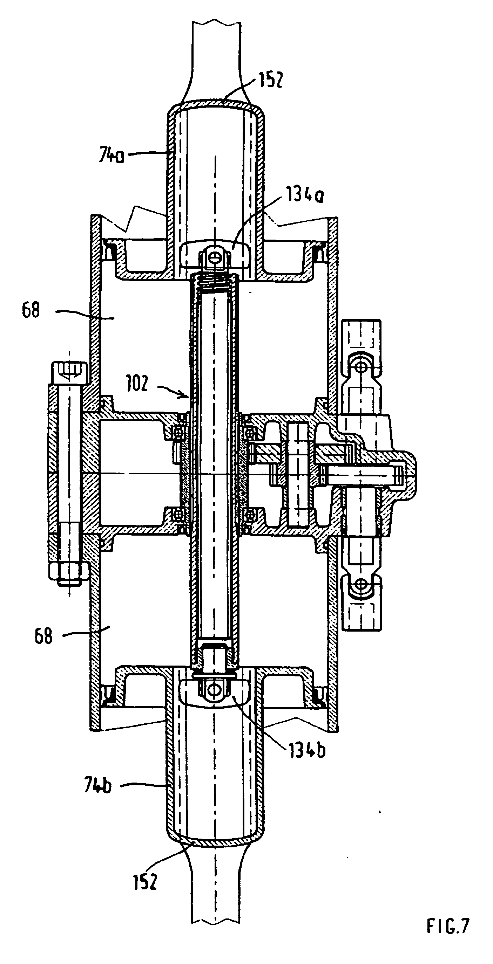

Fig.7 zeigt die Situation, in welcher die Betriebsbremse durch Druckbeaufschlagung der Druckräume 68 der Zylinder-Kolbentriebe 20a, 20b zugespannt, die Feststellbremse aber nach wie vor gelöst ist. Demnach bewegen sich bei einer Betriebsbremsung die beiden Kolben 74a, 74b gegen die Wirkung der Rückstellfedern 82 ähnlich wie bei einer Boxeranordnung nach außen voneinander weg und betätigen über die Kolbenstangen 78 und die Winkelhebel 86 die Druckstangen 8, wodurch die beiden Bremsbalken 10, 12 voneinander weg und die Bremsklötze 14 gegen die Bremsflächen der Räder 6 gepreßt werden. Da die Feststellbremse nicht betätigt wurde, befindet sich der Mutter-Spindeltrieb 102 nach wie vor in eingeschraubter Stellung, wobei die Anschlagkörper 134a, 134b von den zugeordneten Böden 152 der Ausformungen 76 der Kolben 74a, 74b entfernt sind.

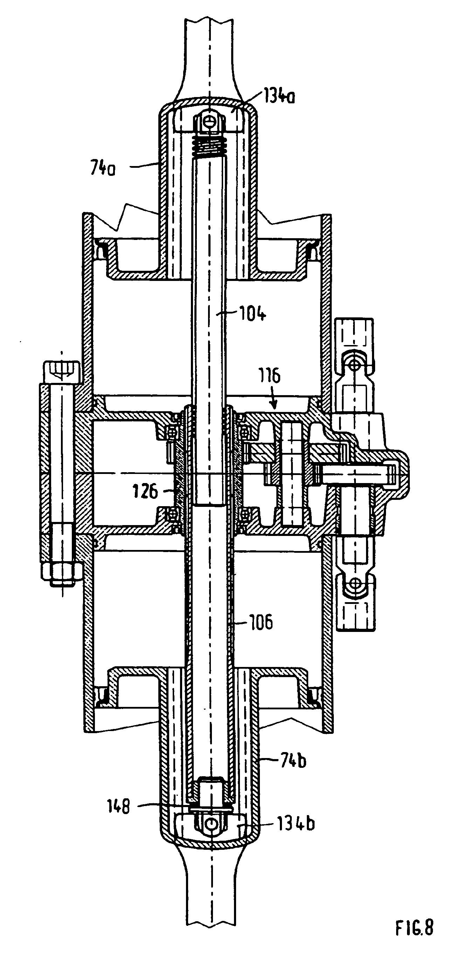

Bei der Stellung gemäß Fig.8 befindet sich hingegen die Feststellbremse in Zuspannstellung, weil aufgrund einer in das Zahnradgetriebe 116 eingeleiteten Drehbewegung die Hülse 126 in Drehung versetzt und dadurch die sich in Bezug zu ihrem Anschlagkörper 134b mittels des Axialnadellagers 148 frei drehbare Mutter 106 gegenüber der durch ihren Anschlagkörper 134a verdrehgesicherten Spindel 104 verschraubt wurde. Infolgedessen hat sich der Mutter-Spindeltrieb 102 beidseitig gelängt, wobei die Längskraft über die Anschlagkörper 134a, 134b auf die Kolben 74a, 74b übertragen wurde und Letztere daraufhin gegen die Wirkung der Rückstellfedern 82 nach außen gedrängt und die Bremsklötze 14 wie bereits bei der Betriebsbremsung beschrieben in Bremseingriffsstellung gebracht wurden. Die Situation von Fig.8 kann auch dadurch hervorgerufen werden, dass zunächst die Betriebsbremse und danach zusätzlich die Feststellbremse zugespannt wird.

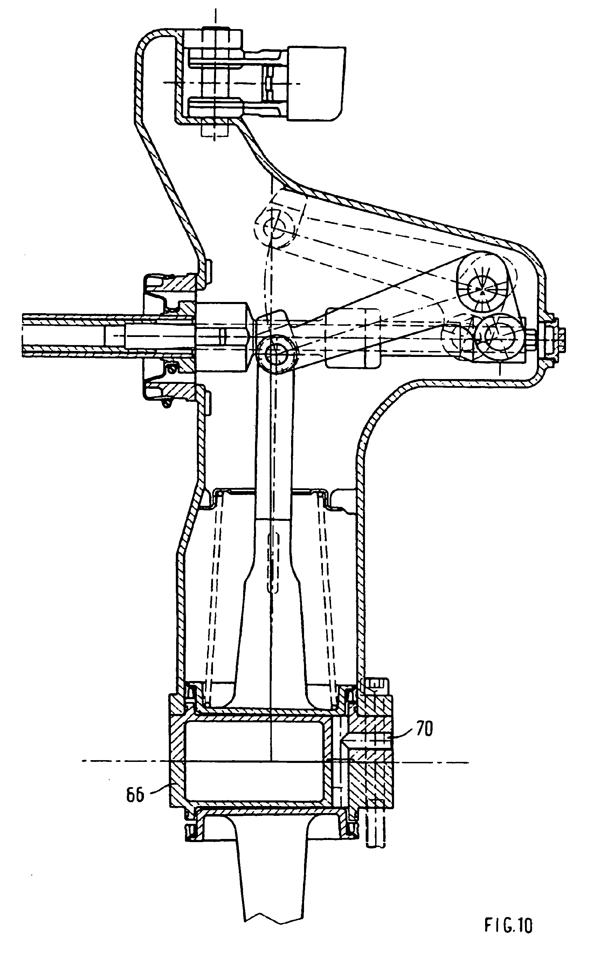

Bei den weiteren Ausführungsbeispielen der Erfindung nach Fig. 10, Fig. 11 und Fig. 12 sind die gegenüber dem vorhergehenden Beispiel gleichbleibenden und gleichwirkenden Teile durch die gleichen Bezugszeilen gekennzeichnet. Im Unterschied zum ersten Ausführungsbeispiel ist bei dem Ausführungsbeispiel von Fig. 10 keine Feststellbremse und folglich auch keine entsprechende Antriebsmechanik vorhanden, so dass im Zwischengehäuse 66 lediglich der gemeinsame Druckmittelanschluß 70 samt Zuführkanälen vorhanden ist. Das Zwischengehäuse 66 ist jedoch in beiden Fällen vorzugsweise identisch, um die Anzahl von Gleichteilen verschiedener Bremsvarianten zu erhöhen.

Bei dem ersten Ausführungsbeispiel gemäß Fig. 1 sind die senkrecht zu den Bremsbalken 10, 12 angeordneten Druckstangen 8 unterhalb eines Querträgers des Drehgestells geführt. Im Unterschied dazu sind bei dem Ausführungsbeispiel gemäß Fig. 11 und Fig. 12 die Druckstangen 8 zueinander winklig angeordnet und divergieren vorzugsweise ausgehend von dem einen Bremsbalken 10, in welchem die Zylinder-Kolbentriebe 20a, 20b aufgenommen sind. Hierdurch können die Druckstangen 8 an einem zentralen, nach unten gezogenen Abschnitt eines Querträgers 154 des Drehgestells rechts und links vorbeigeführt werden. Alternativ hierzu könnten die Druckstangen 8 auch durch Durchgangsöffnungen im Querträger 154 geführt sein. In letzterem Fall ist es erforderlich, dass zur Montage und Demontage der Klotzbremseinrichtung 1 die Druckstangen 8 von den Bremsaktuatoren 20a, 20b leicht trennbar sind.

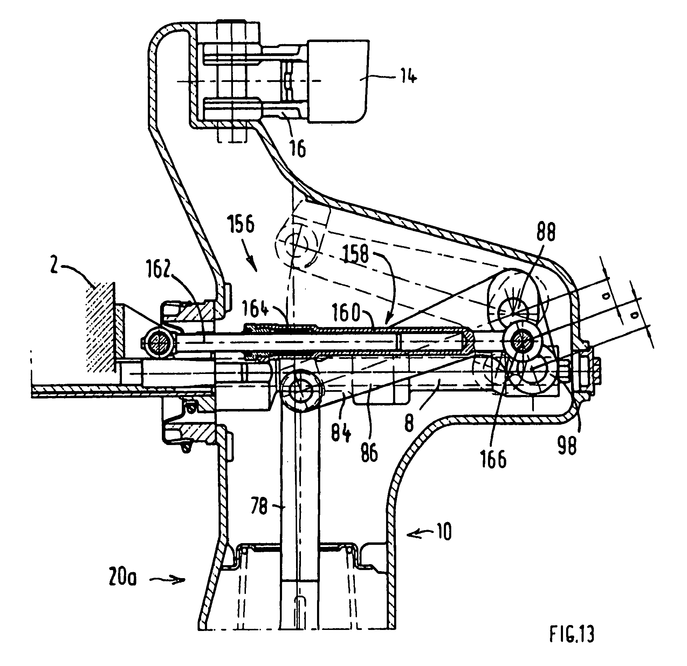

Bei dem Ausführungsbeispiel gemäß Fig.13 ist eine zusätzliche Symmetriereinrichtung 156 vorhanden, um in Lösestellung der Klotzbremseinrichtung 1 einen einseitigen Kontakt der Bremsklötze 14 mit den Rädern 6 zu vermeiden bzw. um gleich große Anlegewege der Bremsklötze 14 zu erzielen. Hierzu ist eine Teleskopeinrichtung 158 mit innerhalb eines Zylinders 160 linear geführtem Stab 162 vorgesehen, wobei mittels eines Reibelements 164 zwischen Stab 162 und Zylinder 160 ein Reibschluss erzeugt wird, welcher einer Längenänderung der Teleskopeinrichtung 158 entgegenwirkt. Die Teleskopeinrichtung 158 ist vorzugsweise parallel zur Fahrzeuglängsrichtung angeordnet, wobei der Stab 162 beispielsweise am Drehgestell 2 und der Zylinder 160 an dem kürzeren Schenkel 90 des Winkelhebels 86 mittig zwischen dessen Bolzenlagerung 88 und dessen Anlenkung 98 an der Druckstange 8 an einem Anlenkpunkt 166 angelenkt ist, was durch die identischen Maße "a" angedeutet ist. Die Funktion der Symmetriereinrichtung 156 ist dann wie folgt: Bei einer Betriebsbremsung wird die Druckstange 8 um einen Gesamtweg betätigt, welcher sich aus der Summe des Anlegeweges der Bremsklötze 14 des einen Bremsbalkens 10 an die zugeordneten Räder 6 und des Anlegeweges der Bremsklötze 14 des anderen Bremsbalkens 12 an die zugeordneten Räder 6 zusammensetzt. Bei gleich großen Anlegewegen, d.h. bei in Bezug zu den zugeordneten Rädern 6 äquidistant oder "symmetrisch" angeordneten Bremsklötzen 14 ändert die Teleskopeinrichtung 158 ihre Länge nicht, da der Anlenkpunkt 166 des Zylinders 160 am Winkelhebel 86 bei einer Bremsung aufgrund der Verlagerung des den Winkelhebel 86 tragenden Bremsbalkens 12 um den halben Gesamtweg in der einen Richtung und einer gleichzeitigen Verlagerung aufgrund der Drehung des Winkelhebels 86 in der Gegenrichtung seine Lage in Bezug zum Drehgestell 2 nicht verändert. Folglich bleibt auch die Lage der am Drehgestell 2 hängenden Klotzbremseinrichtung 1 in der Lösestellung unverändert. Bei unterschiedlichen Anlegewegen, d.h. bei in Bezug zu den zugeordneten Rädern 6 nicht äquidistant angeordneten Bremsklötzen 14 besteht die Gefahr, dass die Bremsklötze 14 auch bei gelöster Bremse an den Rädern 6 schleifen. Bei einer Betätigung der Betriebsbremse oder der Feststellbremse legen sich in diesem Fall die Bremsklötze 14 des Bremsbalkens 10 bzw. 12 mit dem kürzeren Anlegeweg zuerst an die zugeordneten Räder 6 an, wobei sich aufgrund der weiteren Betätigung der Zylinder-Kolbentriebe 20a, 20b die Teleskopeinrichtung 158 unter Überwindung des Reibschlusses zwischen Stab 162 und Zylinder 160 verlängert oder verkürzt, bis der längere Anlegeweg der Bremsklötze 6 des anderen Bremsbalkens 10 bzw. 12 zurückgelegt ist. Beim Lösen der Bremse kehren die beiden Bremsbalken 10, 12 in eine symmetrische Lösestellung mit gleich großen Anlegewegen zurück, wobei der in der Teleskopeinrichtung 158 wirkende Reibschluss ein Rückstellen in eine unsymmetrische Lage verhindert. Dann ist hängende Klotzbremseinrichtung 1 gegenüber dem Drehgestell 2 neu ausgerichtet und zentriert.

### Bezugszahlenliste

- 1: Klotzbremseinrichtung
- 2: Drehgestell
- 4: Radsätze
- 6: Räder
- 8: Druckstangen
- 10: Bremsbalken
- 12: Bremsbalken
- 14: Bremsklötze
- 16: Bremsschuhe
- 18: Hängelaschen
- 20a,b: Zylinder-Kolbentriebe
- 22: Radachsen
- 24: Sphäroblock
- 26: Gummihülle
- 28: Kugelkopf
- 30: Kugelbolzen
- 32: Durchgangsbohrungen
- 34: Ende
- 36: Bremsschuhbolzen
- 38: Aufnahmen
- 40: Lager
- 42: Hülse
- 44: Spurkränze
- 46: Zylinder
- 48: Zylinderlauffläche
- 50: Wandung
- 52: Gehäusehälften
- 54: zyl. Abschnitt
- 56: Flansch
- 58: Abschnitt
- 60: Ausformung
- 62: Mittelachse
- 64: Umlenkungsgetriebe
- 66: Zwischengehäuse
- 68: Druckraum
- 70: Druckmittelanschluß
- 72: Zuganker
- 74a,b: Kolben
- 76: Ausformung
- 78: Kolbenstange
- 80: Zwischenboden
- 82: Rückstellfedern
- 84: Schenkel
- 86: Winkelhebel
- 88: Bolzenlagerung
- 90: Schenkel
- 92: Öffnung
- 94: Dichtung
- 96: Montageöffnung
- 98: Anlenkung
- 100: Antriebsmechanik
- 102: Mutter-Spindeltrieb
- 104: Spindel
- 106: Mutter
- 108: Gelenkwellen
- 110: Fortsatz
- 112: Eingangswelle
- 114: Eingangswelle
- 116: Zahnradgetriebe
- 118: Zahnräder
- 120: Zahnradstufen
- 122: zentrales Zahnrad
- 124: Wälzlager
- 126: Hülse
- 128: Boden
- 130: Bewegungsdichtung
- 132: Keilwellenprofil
- 134a,b: Anschlagkörper
- 136: Seitenflügel
- 138: Nuten
- 140: Wellenstumpf
- 144: Endstück
- 148: Axialnadellager
- 150: Gewinde
- 152: Boden
- 154: Querträger
- 156: Symmetrieeinrichtung
- 158: Teleskopeinrichtung
- 160: Zylinder
- 162: Stab
- 164: Reibelement
- 166: Anlenkpunkt

## Patentansprüche

1. Klotzbremseinrichtung (1) für ein Drehgestell (2) eines Schienenfahrzeugs mit zwei Radsätzen (4) mit je zwei Rädern (6), wobei die Klotzbremseinrichtung zwei jeweils einer Radachse (22) zugeordnete und beinhaltet parallel zu dieser verlaufende Bremsbalken (10, 12), in montiertem Zustand welche Bremsklötze (14) tragen und über Druckstangen (8) miteinander in Verbindung stehen, die durch wenigstens einen druckmittelbetätigten Zylinder-Kolbentrieb (20a, 20b) zum Bremseingriff der Bremsklötze (14) mit zugeordneten Bremsflächen der Räder (6) betätigbar sind, **dadurch gekennzeichnet, dass** zumindest ein Teil eines Bremsbalkens (10) unmittelbar den Zylinder (46) des Zylinder-Kolbentriebs (20a, 20b) bildet.

2. Klotzbremseinrichtung nach Anspruch 1, **dadurch gekennzeichnet, dass** eine Zylinderlauffläche (48) des Zylinders (46) unmittelbar durch eine innere Umfangsfläche der Wandung (50) des Bremsbalkens (10) oder durch eine von der Wandung (10) getragene Zylinderlaufbuchse gebildet wird.

3. Klotzbremseinrichtung nach Anspruch 2, **dadurch gekennzeichnet, dass** in dem Bremsbalken (10) zwei koaxiale und gegenläufig arbeitende Zylinder-Kolbentriebe (20a, 20b) integriert sind.

4. Klotzbremseinrichtung nach Anspruch 3, **dadurch gekennzeichnet, dass** der Bremsbalken (10) zwei in Bezug zu einer Mittelebene des Drehgestells (2) symmetrisch umschlagbar und identisch ausgebildete Gehäusehälften (52) aufweist, welche zumindest abschnittsweise die Zylinder (46) der Zylinder-Kolbentriebe (20a, 20b) bilden.

5. Klotzbremseinrichtung nach Anspruch 4, **dadurch gekennzeichnet, dass** die beiden Gehäusehälften (52) als hohle Gußformlinge ausgebildet sind.

6. Klotzbremseinrichtung nach Anspruch 4 oder 5, **dadurch gekennzeichnet, dass** in den Gehäusehälften (52) je ein den Zylinder-Kolbentrieben (20a, 20b) nachgeordnetes Umlenkungsgetriebe (86) zur Umlenkung der Kolbenbewegung auf die Druckstangen (8) gekapselt aufgenommen ist.

7. Klotzbremseinrichtung nach Anspruch 6, **dadurch gekennzeichnet, dass** das Umlenkungsgetriebe durch je einen an einer Gehäusehälfte (52) angelenkten Winkelhebel (86) gebildet wird.

8. Klotzbremseinrichtung nach Anspruch 7, **dadurch gekennzeichnet, dass** den Gehäusehälften (52) endseitig Aufnahmen (38) für die Bremsklötze (14) angeformt sind.

9. Klotzbremseinrichtung nach einem der Ansprüche 4 bis 8, **dadurch gekennzeichnet, dass** den beiden Gehäusehälften (52) ein Zwischengehäuse (66) zwischengeordnet ist, in welchem ein zentraler, beide Zylinder (46) der Zylinder-Kolbentriebe (20a, 20b) mit Druckmittel versorgender Druckmittelanschluß (70) ausgebildet ist.

10. Klotzbremseinrichtung nach Anspruch 9, **dadurch gekennzeichnet, dass** in dem Zwischengehäuse (66) zumindest ein Teil einer Antriebsmechanik (100) einer Feststellbremse aufgenommen ist.

11. Klotzbremseinrichtung nach Anspruch 10, **dadurch gekennzeichnet, dass** die Antriebsmechanik (100) der Feststellbremse einen durch Feststellbremsbetätigungsorgane rotatorisch antreibbaren und mit den Zylinder-Kolbentrieben (20a, 20b) koaxialen Mutter-Spindeltrieb (102) umfasst, wobei die Spindel (104) an der Druckseite des einen Kolbens (74a) und die Mutter (106) an der Druckseite des anderen Kolbens (74b) anschlagbar ausgebildet ist.

12. Klotzbremseinrichtung nach Anspruch 11, **dadurch gekennzeichnet, dass** die Einleitung der Drehbewegung in die Mutter (106) des Mutter-Spindeltriebs (102) erfolgt und dass die Spindel (104) an dem einen Kolben (74a) linear verschieblich und verdrehgesichert und die Mutter (106) an dem anderen Kolben (74b) linear verschieblich aber frei drehbar gelagert ist.

13. Klotzbremseinrichtung nach Anspruch 12, **gekennzeichnet durch** eine Führung der Spindel (104) und der Mutter (106) innerhalb je einer zentrischen, becherförmigen Ausformung (76) im zugeordneten Kolben (74a, 74b).

14. Klotzbremseinrichtung nach Anspruch 13, **dadurch gekennzeichnet, dass** die Spindel (104) und die Mutter (106) endseitig mit je einem komplementär zu einem Boden (152) der Ausformungen (76) der Kolben (74a, 74b) geformten Anschlagkörper (134a, 134b) versehen sind.

15. Klotzbremseinrichtung nach Anspruch 14, **dadurch gekennzeichnet, dass** die Mutter (106) des Mutter-Spindeltriebs (102) innerhalb einer im Zwischengehäuse (66) koaxialen, axialfest und drehbar gelagerten Hülse (126) axial verschieblich und mitdrehbar gelagert ist, welche zum Zuspannen und Lösen der Feststellbremse rotatorisch antreibbar ist.

16. Klotzbremseinrichtung nach einem der Ansprüche 1 bis 15, **dadurch gekennzeichnet, dass** sie als Bremsmodul beinhaltend wenigstens die Bremsbalken (10, 12), die Druckstangen (8), die Bremsklötze (14) und die Zylinder-Kolbentriebe (20a, 20b) durch Hängelaschen (18) am Drehgestell (2) hängend befestigt ist.

17. Klotzbremseinrichtung nach Anspruch 16, **dadurch gekennzeichnet, dass** die Hängelaschen (18) in eingebautem Zustand einendseitig am Drehgestell (2) durch sphärische Lager (24) mit elastischdämpfenden Elementen (26) allseitig schwenkbar gelagert und anderendseitig an die Bremsklötze (14) tragende Bremsschuhe (16) angelenkt sind.

18. Klotzbremseinrichtung nach einem der Ansprüche 1 bis 17, **dadurch gekennzeichnet, dass** in die Druckstangen (8) Verschleißnachstelleinrichtungen integriert sind.

19. Klotzbremseinrichtung nach einem der Ansprüche 1 bis 18, **dadurch gekennzeichnet, dass** die Druckstangen (8) in eingebautem Zustand im wesentlichen senkrecht zu den Radachsen (22) angeordnet sind.

20. Klotzbremseinrichtung nach einem der Ansprüche 1 bis 18, **dadurch gekennzeichnet, dass** die Druckstangen (8) zueinander winklig angeordnet sind und ausgehend von dem die Zylinder-Kolbentriebe (20a, 20b) aufnehmenden Bremsbalken (10) divergieren.

21. Klotzbremseinrichtung nach einem der vorhergehenden Ansprüche, **dadurch gekennzeichnet, dass** der Kolbenhub eines Zylinder-Kolbentriebs (20a, 20b) groß gegenüber seinem Durchmesser ist.

## Claims

1. A tread brake unit (1) for a bogie (2) of a railway vehicle having two wheel sets (4) each with two wheels (6), said tread brake unit containing two brake beams (10, 12) each of which is assigned and, when fitted, runs parallel to a wheel axle (22) and which hold brake blocks (14) and are connected to one another by pressure rods (8) which can be actuated by at least one pressure-medium-actuated cylinder/piston drive (20a, 20b) in order to engage the brake blocks (14) with assigned braking surfaces on the wheels (6) for the purposes of braking,
**characterised in that**
at least part of a brake beam (10) forms the cylinder (46) of the cylinder/piston drive (20a, 20b).

2. A tread brake unit in accordance with claim 1,
**characterised in that**
one cylinder face (48) of the cylinder (46) takes the form of an inner peripheral face of the wall (50) of the brake beam (10) or of a cylinder liner supported on the wall (10).

3. A tread brake unit in accordance with claim 2,
**characterised in that**
integrated in the brake beam (10) are two coaxial cylinder/piston drives (20a, 20b) which work in opposite directions.

4. A tread brake unit in accordance with claim 3,
**characterised in that**
the brake beam (10) has two identical housing halves (52) which can be moved symmetrically in relation to a central plane of the bogie (2) and which in certain sections at least form the cylinders (46) of the cylinder/piston drive (20a, 20b).

5. A tread brake unit in accordance with claim 4,
**characterised in that**
both housing halves (52) are designed as hollow cast parts.

6. A tread brake unit in accordance with claim 4 or 5,
**characterised in that**
encapsulated in each of the housing halves (52) is a direction-changing gear set (86) subordinate to the cylinder/piston drive (20a, 20b) for changing the direction of the piston movement to the pressure rods (8).

7. A tread brake unit in accordance with claim 6,
**characterised in that**
the direction-changing gear set takes the form of an angle lever (86) attached to each housing half (52).

8. A tread brake unit in accordance with claim 7,
**characterised in that**
receivers (38) for the brake blocks (14) are mounted at the ends of the housing halves (52).

9. A tread brake unit in accordance with one of claims 4 to 8,
**characterised in that**
positioned between the two housing halves (52) is an intermediate housing (66) in which is provided a central pressure-medium connection (70) which supplies pressure medium to both cylinders (46) in the cylinder/piston drive (20a, 20b).

10. A tread brake unit in accordance with claim 9,
**characterised in that**
received in the intermediate housing (66) is at least one part of a drive mechanism (100) of a parking brake.

11. A tread brake unit in accordance with claim 10,
**characterised in that**
the drive mechanism (100) of the parking brake comprises a nut/spindle drive (102) which is driven rotationally by parking brake actuating elements and positioned coaxial to the cylinder/piston drive (20a, 20b), pressure being applied to the spindle (104) on the pressure side of one piston (74a) and to the nut (106) on the pressure side of the other piston (74b).

12. A tread brake unit in accordance with claim 11,
**characterised in that**
the rotational movement is initiated in the nut (106) of the nut/spindle drive (102), and the spindle (104) is mounted on one piston (74a) such that it can be moved linearly and cannot be rotated while the nut (104) is mounted on the other piston (74b) such that it can be moved linearly and can also be freely rotated.

13. A tread brake unit in accordance with claim 12,
**characterised in that**
the spindle (104) and the nut (106) are mounted inside a central beaker-shaped recess (76) in the assigned piston (74a, 74b).

14. A tread brake unit in accordance with claim 13,
**characterised in that**
the ends of the spindle (104) and the nut (106) are each provided with a stop body (134a, 134b) which is shaped in a manner complementary to a base (152) of the recesses (76) in the pistons (74a, 74b).

15. A tread brake unit in accordance with claim 14,
**characterised in that**
the nut (106) of the nut/spindle drive (102) is mounted inside a sleeve (126), itself mounted coaxially and axially fixed in an intermediate housing (66) such that it is able to rotate, such that it is able to move axially and rotate with said sleeve (126), it being possible to drive said sleeve (126) rotationally in order to apply and release the parking brake.

16. A tread brake unit in accordance with one of claims 1 to 15,
**characterised in that**
as a brake module containing at least the brake beams (10, 12), the pressure rods (8), the brake blocks (14) and the cylinder/piston drive (20a, 20b), it is suspended from the bogie (2) by hanging support links (18).

17. A tread brake unit in accordance with claim 16,
**characterised in that**
when fitted, the hanging support links (18) are mounted on the bogie (2) by means of spherical bearings (24) with elastically damping elements (26) such that they are able to pivot universally at one end, and attached to the brake shoes (16) holding the brake blocks (14) at the other end.

18. A tread brake unit in accordance with one of claims 1 to 17,
**characterised in that**
wear adjustment devices are integrated in the pressure rods (8).

19. A tread brake unit in accordance with one of claims 1 to 18,
**characterised in that**
when fitted, the pressure rods (8) are positioned essentially perpendicular to the wheel axes (22).

20. A tread brake unit in accordance with one of claims 1 to 18,
**characterised in that**
the pressure rods (8) are positioned at an angle in relation to one another and diverge from the brake beams (10) which receive the piston/cylinder drive (20a, 20b).

21. A tread brake unit in accordance with one of the preceding claims,
**characterised in that**
the piston stroke of a piston/cylinder drive (20a, 20b) is large relative to its diameter.

## Revendications

1. Dispositif (1) de freinage à sabots pour un bogie (2) d'un véhicule ferroviaire doté de deux essieux montés (4) pourvus chacun de deux roues (6), sachant que le dispositif de freinage à sabot comprend deux barres de frein (10, 12) associées chacune à un essieu (22) et s'étendant parallèlement à cet essieu dans l'état monté, barres qui portent des sabots de frein (14) et sont reliées entre elles via des tiges de compression (8) qui, par au moins un entraînement (20a, 20b) à cylindre-piston actionné par fluide sous pression, peuvent être actionnées en vue de l'engagement de freinage des sabots de frein (14) avec des surfaces de freinage associées des roues (6), **caractérisé en ce qu'**au moins une partie d'une barre de frein (10) forme directement le cylindre (46) de l'entraînement (20a, 20b) à cylindre-piston.

2. Dispositif de freinage à sabots suivant la revendication 1, **caractérisé en ce qu'**une surface de glissement (48) du cylindre (46) est directement formée par une surface périphérique intérieure de la paroi (50) de la barre de frein (10) ou par une chemise de cylindre portée par la paroi (50).

3. Dispositif de freinage à sabots suivant la revendication 2, **caractérisé en ce que** deux entraînements (20a, 20b) à cylindre-piston coaxiaux et travaillant en sens contraires sont intégrés dans la barre de frein (10).

4. Dispositif de freinage à sabots suivant la revendication 3, **caractérisé en ce que** la barre de frein (10) comporte deux moitiés (52) de boîtier réalisées identiques et pouvant être rabattues symétriquement par rapport à un plan médian du bogie (2), moitiés qui forment au moins pour partie les cylindres (46) des entraînements (20a, 20b) à cylindre-piston.

5. Dispositif de freinage à sabots suivant la revendication 4, **caractérisé en ce que** les deux moitiés (52) de boîtier sont réalisées sous forme de pièces moulées creuses en fonte.

6. Dispositif de freinage à sabots suivant la revendication 4 ou 5, **caractérisé en ce qu'**une transmission (86) de renvoi respective montée à la suite des entraînements (20a, 20b) à cylindre-piston est hermétiquement reçue dans les moitiés (52) de boîtier pour renvoyer le mouvement des pistons sur les tiges de compression (8).

7. Dispositif de freinage à sabots suivant la revendication 6, **caractérisé en ce que** la transmission de renvoi est formée par un levier coudé respectif (86) articulé sur une moitié (52) de boîtier.

8. Dispositif de freinage à sabots suivant la revendication 7, **caractérisé en ce que** des logements (38) pour les sabots de frein (14) sont formés terminalement sur les moitiés (52) de boîtier.

9. Dispositif de freinage à sabots suivant l'une des revendications 4 à 8, **caractérisé en ce qu'**un boîtier intermédiaire (66) est intercalé entre les deux moitiés de boîtier (52), dans lequel est formé un branchement central (70) de fluide sous pression alimentant en fluide sous pression les deux cylindres (46) des entraînements (20a, 20b) à cylindre-piston.

10. Dispositif de freinage à sabots suivant la revendication 9, **caractérisé en ce qu'**au moins une partie d'un mécanisme d'entraînement (100) d'un frein de stationnement est reçue dans le boîtier intermédiaire (66).

11. Dispositif de freinage à sabots suivant la revendication 10, **caractérisé en ce que** le mécanisme d'entraînement (100) du frein de stationnement comprend un entraînement à écrou-broche (102) pouvant être entraîné en rotation par des organes d'actionnement de frein de stationnement et coaxial aux entraînements (20a, 20b) à cylindre-piston, sachant que la broche (104) est conçue pour venir buter contre le côté de pression d'un premier piston (74a) et l'écrou (106) contre le côté de pression de l'autre piston (74b).

12. Dispositif de freinage à sabots suivant la revendication 11, **caractérisé en ce que** l'introduction du mouvement de rotation s'effectue dans l'écrou (106) de l'entraînement à écrou-broche (102), et **en ce que** la broche (104) porte contre le premier piston (74a) en pouvant être déplacée linéairement et en étant bloquée en rotation, et l'écrou (106) porte contre l'autre piston (74b) en pouvant être déplacé linéairement mais en étant librement rotatif.

13. Dispositif de freinage à sabots suivant la revendication 12, **caractérisé par** un guidage de la broche (104) et de l'écrou (106) à l'intérieur d'un renfoncement central respectif en forme de godet (76) dans le piston associé (74a, 74b).

14. Dispositif de freinage à sabots suivant la revendication 13, **caractérisé en ce que** la broche (104) et l'écrou (106) sont chacun pourvus terminalement d'un corps de butée (134a, 134b) réalisé d'une forme complémentaire à un fond (152) des renfoncements (76) des pistons (74a, 74b).

15. Dispositif de freinage à sabots suivant la revendication 14, **caractérisé en ce que** l'écrou (106) de l'entraînement à écrou-broche (102) est monté à déplacement axial et en rotation conjointe à l'intérieur d'un manchon coaxial (126) monté à rotation et en fixité axiale dans le boîtier intermédiaire (66), manchon qui peut être entraîné en rotation pour serrer et desserrer le frein de stationnement.

16. Dispositif de freinage à sabots suivant l'une des revendications 1 à 15, **caractérisé en ce qu'**il est réalisé sous forme de module de freinage comprenant au moins les barres de frein (10, 12), les tiges de compression (8), les sabots de frein (14) et les entraînements (20a, 20b) à cylindre-piston, module qui est fixé en suspension sur le bogie (2) par des pattes de suspension (18).

17. Dispositif de freinage à sabots suivant la revendication 16, **caractérisé en ce que** les pattes de suspension (18), dans l'état installé, sont à une extrémité montées à pivotement polydirectionnel sur le bogie (2) par des paliers sphériques (24) pourvus d'éléments (26) d'amortissement élastique, et sont à l'autre extrémité articulées sur des porte-sabots (16) portant les sabots de frein (14).

18. Dispositif de freinage à sabots suivant l'une des revendications 1 à 17, **caractérisé en ce que** des dispositifs de rattrapage d'usure sont intégrés dans les tiges de compression (8).

19. Dispositif de freinage à sabots suivant l'une des revendications 1 à 18, **caractérisé en ce que** les tiges de compression (8) sont, dans l'état installé, disposées essentiellement perpendiculairement aux essieux (22).

20. Dispositif de freinage à sabots suivant l'une des revendications 1 à 18, **caractérisé en ce que** les tiges de compression (8) sont disposées en angle l'une par rapport à l'autre et divergent en partant de la barre de frein (10) recevant les entraînements (20a, 20b) à cylindre-piston.

21. Dispositif de freinage à sabots suivant l'une des revendications précédentes, **caractérisé en ce que** la course de piston d'un entraînement (20a, 20b) à cylindre-piston est grande par rapport à son diamètre.
